# EUROPEAN PATENT APPLICATION

(11) **EP 1 677 000 A2**
(43) Date of publication of application: **05.07.2006**
(21) Application number: 05381057.8
(22) Date of filing: 15.12.2005
(51) Int. Cl.: F03D 1/00, F03D 11/04

(54) **Procedure for removing the cover roof from a wind turbine**

(30) Priority: 15.12.2004 ES 200403111
(71) Applicant: Gamesa Eolica, S.A. (Sociedad Unipersonal), 31013 Pamplona (Navarra) (ES)
(72) Inventor: José Ignacio, Llorente González, Gamesa Eólica, SA, 31013 Pamplona (ES); Jesús, Zaldua Lasa, c/o Gamesa Eólica, 31013 Pamplona (ES)

(57) **Abstract**

The procedure for removing the cover roof from a wind turbine is based on the layout of several groups of guide rails anchored to the cover roof (4) and the nacelle (5). The guide rails anchored to the nacelle (5) are fixed (1) and the guide rails anchored to the cover roof (4) are moveable (2). The sideways movement of the cover roof (4) involves the long holes (3) in the guide rails (1) and (2) the pins (7) to a point at which it begins to swing and starts to turn, the axis for which is the pivot (8) located at the joint between the fixed guide rail (1) and the moveable guide rail (2). This cover roof (4) is supported during turning by a cable (6) and shored using a non-articulated part once the cover roof removal procedure has been completed (4).

## Description

**Purpose of the Invention.**

The purpose of this invention is, as its title indicates, to provide a procedure to remove the cover roof based on the layout of guide rails with long holes and pins to move the cover roof sideways to a point at which the cover roof pivots, leaving the nacelle free.

**Background to the Invention.**

Patent WO 9206295 describes a frame of the nacelle that is opened in half using a hydraulic mechanism so that it does not have to be lowered, as when folded it does not hinder maintenance work and during the removal of different components through the top of the wind turbine.

One of the main differences in relation to the method indicated in the patent is that, in this invention, not only is the cover roof folded but the entire nacelle frame. Moreover, given that the aim of the method, to fold the nacelle frame, is different, the use of guide rails is not required and the action is driven by hydraulic pistons.

Patent EP 0372675 is a tool that acts as a hinge and that allows the movement and subsequent folding of the cover to then allow for the front cover roof of aircraft fuselage to be fixed vertically. The most important differences in relation to the purpose of the invention is that the nacelle cover roof is guided along rail girders whereas in EP 0372675 hollow tubes are used into which the mechanism is entered and slides along. It must be noted that the procedure is carried out manually and, therefore, is not applicable to heavy cover roof such as that of wind turbines.

Patent US 4611945 is based on the articulated joint of inter-sliding tubular parts. As with the aforementioned patent, the difference with the purpose of the patent is that the nacelle cover roof slides and pivots on the profiles or rail girders instead of along tubular parts.

Patent FR 2487899 is an invention that improves a mechanism used to open and store a lightweight door (furniture, etc.), based on manual lifting to an almost horizontal position and subsequently sliding the door along top rails in which it is housed. Differences include the impossibility of using this method for heavy objects and the fact that there are no mechanical means available.

**Description.**

The cover roofs of wind turbines are relatively light and, therefore, are relatively easy to handle. Therefore, the main difficulty lies in their volume, which includes a large surface area exposed to the wind and the fact that there are no external means for handling components, making it simpler to pull the cover roof to one side of the nacelle than to completely remove it.

To remove the cover roof sideways, a system must be available that allows the part to be removed to be secured and then moved sideways before being turned to leave the plant and the inside of the wind turbine completely open.

The solution adopted is based on the layout of rails with their respective guides. The rails are fixed to the nacelle whereas the guides are moveable parts, since they slide along the rails and are anchored to the cover roof. The rails will allow the cover roof to be slid sideways over the nacelle using long holes and pins until it reaches a point at which the cover roof begins to pivot on a 90° turn to leave the wind turbine plant open. The pins and pivots are inserted between the rails and their respective guides so that the cover roof guides slide along the nacelle rails to guide the movement. Both the assembly and the securing of the guide pins in their appropriate position is manual. Once the fixed rails have been anchored to the nacelle, the cover roof is released at one end to be able to fit the moveable guides on the corresponding rails. The preferred number of guide rail units is two to three, which is enough to withstand the weight of the cover roof and maintain the necessary stability during its removal process.

Moreover, as the cover roof is turned it must be secured to some point so that the operator does not directly withstand the weight of the cover roof during removal or offset the entire weight to cover the nacelle. This problem is solved using a cable to secure the cover roof as it turns and that includes a spool with a manual or assisted ratchet to release and rewind the cable. This cable is fixed using a carabiner or similar easy-action system at one of its ends to a fixed point on the nacelle and at the other to the moveable cover roof guide.

The guides are mounted on the same rigs where the screws joining the cover roof to the nacelle are mounted, as this location does not cause an obstacle when removing the cover roof or for subsequent crane handling. Furthermore, due to the large number of possible locations, the system is flexible in terms of both the layout and the number of guides. Once the cover roof has turned, it can be shored to other points with non-articulated parts that withstand the weight of the cover roof, such as a gusset or similar and the parts that may be a hindrance be removed, securing the cover roof with the non-articulated, resistant gusset and then dismantling the fixed nacelle rails before carrying out the same operation in the reverse order to close the cover roof. The system allows for the cover roof to be closed once the repair or maintenance work on the wind turbine is complete and, where necessary, for the crane to be partially dismantled and the nacelle provisionally covered.

**Brief description of the figures .**

Figure 1 shows the detailed system parts.

Figures 2a, 2b, 2c, 2d and 2e show the different removal sequences of the wind turbine cover roof

Figure 3a shows the initial position of the wind turbine cover roof and Figure 3b its final position on completion of the removal procedure.

**Description of preferred implementation.**

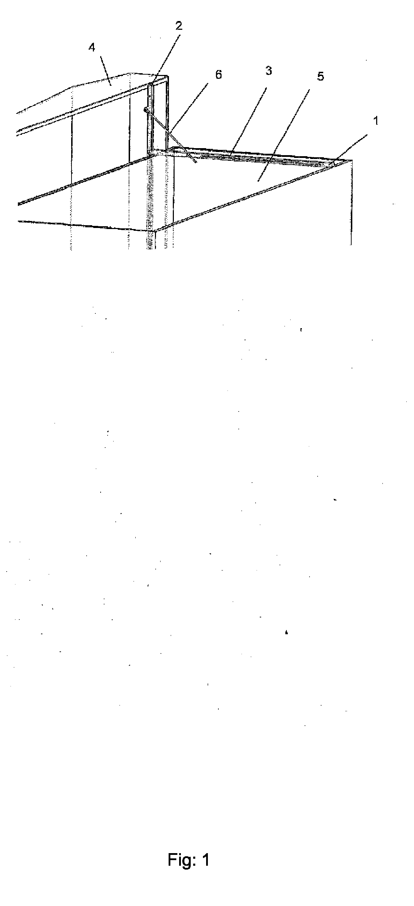

As described in Figure 1, the procedure for removing the cover roof (4) is based on the layout of several guide rail units, each one of which is made up of a fixed rail (1) on the nacelle (5) and a moveable guide (2) fitted to the cover roof (4).

The fixed rails (1) are fitted with long holes (3) through which the corresponding moveable guides slide using pins (7) so that the cover roof (4) of the nacelle (5) moves sideways to a point at which it begins to pivot on a turn that will leave the wind turbine plant free. At this point, a pivot (8) is fixed that will be the turning axis for the cover roof (4). The length of the fixed rail (1) will be above the length of the nacelle (5) so that one of its ends juts out to allow the moveable guide (2) to turn.

Furthermore, between the moveable guide (2) anchored to the cover roof (4) and the fixed rail (1) anchored to the nacelle (5) there is a cable (6) with a spool fitted with a ratchet mechanism, not shown in the figure, that will secure the cover roof (4) as it turns. Once the cover roof (4) has been removed, it can be shored to a non-articulated part to provide the assembly with rigidity.

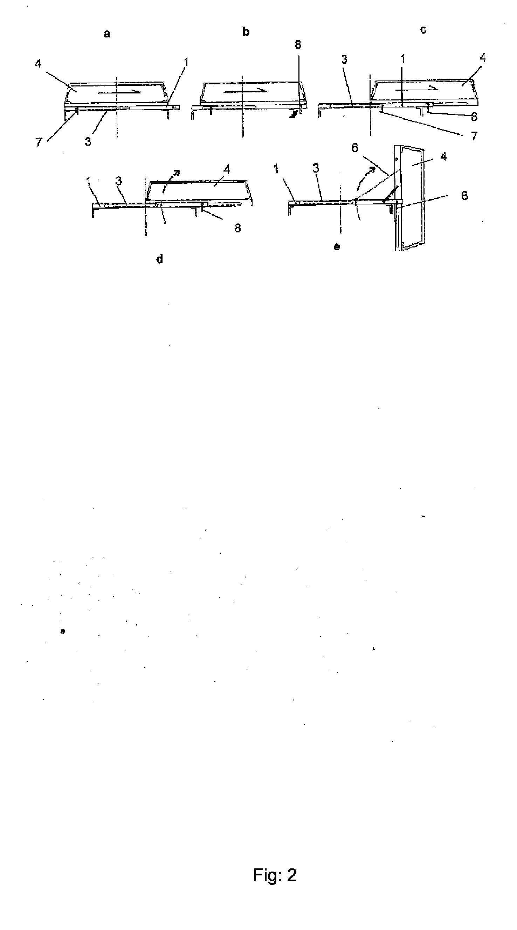

As shown in Figures 2a and 2b, the cover roof (4) of the nacelle (5) starts to move sideways at the point at which the pin (7) of the moveabie guide (2) slides along the long hole (3) in the fixed rail (1) until the pivot (8) of the moveable guide (2) can be inserted in the fixed rail (1) manually. Subsequently, the cover roof (4) can slide until approximately half the length of the fixed rail (1), guided by the pins (7) on the moveable guides (2). On reaching this point, the pin (7) is released and the pivot (8) is fixed, rotating the cover roof (4) around this pivot (8) so that the cover roof (4) turns 90° secured by the cable (6) until it is perpendicular to the nacelle (5), as shown in Figures 2c, 2d and 2e.

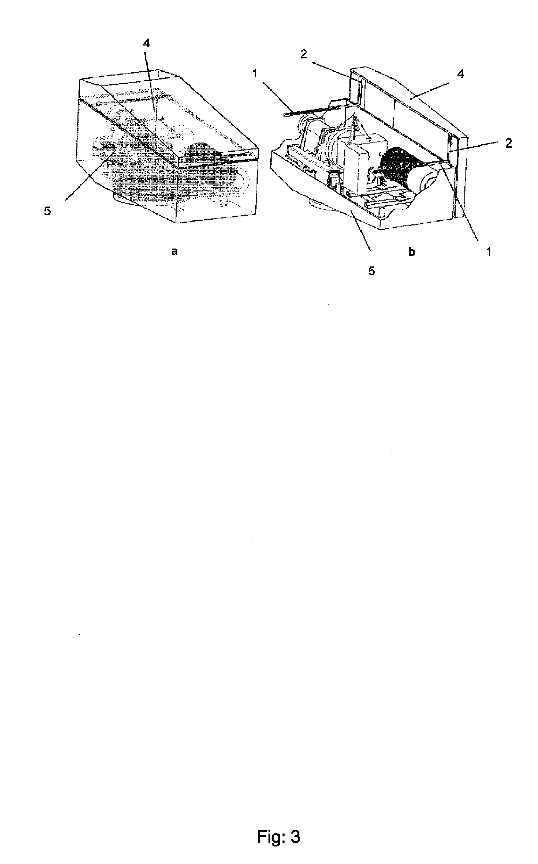

As can be seen in Figures 3a and 3b, to remove the cover roof (4) of the nacelle (5) there must be a procedure in force that makes this job easier, given that, despite the weight of the cover roof (4) not being excessive, the surface exposed to the wind and the lack of any external means of handling makes it easier to remove it sideways to leave the wind turbine plant completely free when the cover roof (4) reaches its final position.

## Claims

1. Procedure to remove the cover roof of a wind turbine **characterised by** the layout of several units of fixed rails (1) anchored to the nacelle (5) with their corresponding moveable guides (2) anchored to the cover roof (4), the fixed rails (1) being fitted with long holes along with the pins (7) in the moveable guides (2) slide to guide the sideways movement of the cover roof (4) over the nacelle (5) to a point where said cover roof (4) begins to turn in relation to the front of the nacelle (5), the axis of which is a pivot (8) fitted on moveable guides (2), and that is fixed manually; the cover roof (4) can be shored, once turning is complete, to certain points using a non-articulated part such as a gusset or similar.

2. Procedure to remove the cover roof of a wind turbine according to Claim 1, **characterised by** the fact that the rails (1) anchored to the nacelle (5) are fixed and the guides anchored to the cover roof (4) are moveable (2) and by the fact that the length of the fixed rail (1) will be above the length of the nacelle (5) so that one of its ends juts out to allow the moveable guide (2) to turn.

3. Procedure to remove the cover roof of a wind turbine according to Claim 2, **characterised by** the fact that the cover roof (4) moves sideways along long holes (3) in the fixed rails (1) using pins (7) fitted to the moveable guides (2).

4. Procedure to remove the cover roof of a wind turbine according to Claim 1, **characterised by** the fact that the cover roof (4) is secured by a cable (6) as it turns, which is fitted with a spool that includes a manual or assisted ratchet mechanism to release and rewind the cable.

5. Procedure to remove the cover roof of a wind turbine according to Claim 4, **characterised by** the fact that the cable (6) is secured at one end to a fixed point on the nacelle (5) and at the other to the moveable guide (2).

6. Procedure to remove the cover roof of a wind turbine according to Claim 1, **characterised by** the fact that the cover roof (4) moves lineally guided by long holes (3), pins (7) and pivots (8) to a point at which it begins to swing and starts to turn, the axis of which is the pivot (8) located at the joint between the fixed guide rail (1) and the moveable guide rail (2).
